# EUROPEAN PATENT APPLICATION

(11) **EP 4 398 212 A1**
(43) Date of publication of application: **10.07.2024**
(21) Application number: 22862591.9
(22) Date of filing: 21.03.2022
(51) Int. Cl.: G08C 17/02, H04W 4/06

(54) **REMOTE CONTROL CONNECTION METHOD AND APPARATUS, REMOTE CONTROL AND SYSTEM**

(30) Priority: 30.08.2021 CN 202111007708
(71) Applicant: Foshan Shunde Midea Electric Science and Technology Co., Ltd., Foshan, Guangdong 528311 (CN); GD Midea Air-Conditioning Equipment Co., Ltd., Foshan, Guangdong 528311 (CN)
(72) Inventor: YAN, Lin, Foshan, Guangdong 528311 (CN)
(74) Representative: Ran, Handong
(86) International application number: PCT/CN2022/082086
(87) International publication number: WO 2023/029444

(57) **Abstract**

A remote control connection method and apparatus, a remote control and a system, which are applied in the technical field of wireless control. The remote control acquires first communication identification information stored in a local storage region of the remote control (S201); the remote control scans second communication identification information broadcasted by an electrical device, and matches the scanned second communication identification information with the first communication identification information (S202); and if the second communication identification information successfully matches the first communication identification information, a short-range radio frequency communication link between the remote control and the electrical device is established, wherein the short-range radio frequency communication link is used for the remote control to control the electrical device (S203).

## Description

### CROSS-REFERENCE TO RELATED APPLICATIONS

This application claims priorities to Chinese Patent Application No. 202111007708.6 filed on August 30, 2021 and entitled "REMOTE CONTROL CONNECTION METHOD AND APPARATUS, REMOTE CONTROLLER, AND SYSTEM", the entire contents of which are incorporated herein by reference.

### FIELD

The present disclosure relates to the technical field of wireless control, and in particular, to a remote control connection method and apparatus, a remote controller, and a system.

### BACKGROUND

On a smart television and a network set-top box (television box), a common mainstream remote controller has two remote control modes of "infrared" and "Bluetooth". A Bluetooth remote controller has garnered increasing attention from manufacturers and favor from consumers due to its characteristics such as "no need for alignment," "ability to control around corners," and "long control distance."

However, the Bluetooth remote controller has numerous defects and problems that impact users' daily use operation. One of technical problems is described below. The Bluetooth remote controller needs to be paired and connected for use in its each connection, and needs to be operated by a user each time. Moreover, the connection process usually requires a display screen for accurate pairing and connection with the remote controller. Therefore, pairing connection efficiency between an electrical appliance and the remote controller is low.

### SUMMARY

With a remote control connection method and apparatus, a remote controller, and a system provided by embodiments of the present disclosure, a technical problem of low pairing connection efficiency between an electrical appliance and the remote controller is solved to some extent.

According to a first aspect, an embodiment of the present disclosure provides a remote control connection method, applied in a remote controller. The method includes: obtaining first communication identification information stored in a local storage region of the remote controller; scanning second communication identification information broadcasted by an electrical appliance, and matching the scanned second communication identification information with the first communication identification information; and establishing, in response to the second communication identification information being successfully matched with the first communication identification information, a short-range radio-frequency communication link between the remote controller and the electrical appliance. The short-range radio-frequency communication link is used for control of the electrical appliance by the remote controller.

In some implementations, said establishing the short-range radio-frequency communication link between the remote controller and the electrical appliance includes: initiating a radio-frequency connection request to the electrical appliance that broadcasts the second communication identification information, to establish a radio-frequency connection between the remote controller and the electrical appliance; performing identity authentication on the electrical appliance and the remote controller based on the radio-frequency connection; and forming, in response to each of the identity authentication of the electrical appliance and the identity authentication of the remote controller being passed, the short-range radio-frequency communication link between the remote controller and the electrical appliance.

In some implementations, the method further includes, subsequent to said scanning the second communication identification information broadcasted by the electrical appliance: determining whether the first communication identification information is valid; and performing, in response to the first communication identification information being valid, said matching the scanned second communication identification information with the first communication identification information.

In some implementations, the method further includes, subsequent to said determining whether the first communication identification information is valid: determining, in response to the first communication identification information being invalid, second communication identification information based on a predetermined signal strength threshold; and initiating a radio-frequency connection request to the electrical appliance that broadcasts the second communication identification information, to establish the short-range radio-frequency communication link between the remote controller and the electrical appliance for the first time.

In some implementations, when the short-range radio-frequency communication link between the remote controller and the electrical appliance is established for the first time, the second communication identification information of the electrical appliance is written to the local storage region of the remote controller to form a binding relationship between the remote controller and the electrical appliance; or each time the short-range radio-frequency communication link is established between the remote controller and the electrical appliance, the second communication identification information of the electrical appliance is written to the local storage region of the remote controller to form the binding relationship between the remote controller and the electrical appliance.

In some implementations, the method further includes, subsequent to said establishing the short-range radio-frequency communication link between the remote controller and the electrical appliance: detecting whether a next key operation occurs within a predetermined delay interval subsequent to a current key operation on the remote controller; obtaining, in response to no next key operation occurring within the predetermined delay interval subsequent to the current key operation on the remote controller, a current state of the electrical appliance; and controlling the remote controller to enter a sleep state corresponding to the current state of the electrical appliance.

In some implementations, said controlling the remote controller to enter the sleep state corresponding to the current state of the electrical appliance includes: controlling, in response to the electrical appliance being currently in a power-on state, the remote controller to enter a first sleep state, wherein in the first sleep state, the short-range radio-frequency communication link between the remote controller and the electrical appliance is in a connection holding state; and controlling, in response to the electrical appliance being currently in a power-off state, the remote controller to enter a second sleep state. In the second sleep state, the short-range radio-frequency communication link between the remote controller and the electrical appliance is in an off state. Power consumption of the second sleep state is smaller than power consumption of the first sleep state.

In some implementations, the method further includes: clearing, in response to a target key operation on the remote controller, the first communication identification information stored in the local storage region of the remote controller to recover to an invalid communication identification value.

According to a second aspect, an embodiment of the present disclosure provides a remote control connection apparatus, applied in a remote controller. The apparatus includes: an information obtaining unit configured to obtain first communication identification information stored in a local storage region of the remote controller; a scanning matching unit configured to scan second communication identification information broadcasted by an electrical appliance and match the scanned second communication identification information with the first communication identification information; and an establishing unit configured to establish, in response to the second communication identification information being successfully matched with the first communication identification information, a short-range radio-frequency communication link between the remote controller and the electrical appliance. The short-range radio-frequency communication link is used for control of electrical appliance by the remote controller.

According to a third aspect, an embodiment of the present disclosure provides a remote controller. The remote controller includes a memory, a processor, and a computer program stored on the memory and executable on the processor. The processor, when executing the computer program, implements the method as described according to any one of implementations of the first aspect.

According to a fourth aspect, an embodiment of the present disclosure provides a remote control connection system. The remote control connection system includes: an electrical appliance configured to broadcast second communication identification information of the electrical appliance in a power-up state; and a remote controller configured to: obtain first communication identification information stored in a local storage region of the remote controller; scan the second communication identification information broadcasted by the electrical appliance, and match the scanned second communication identification information with the first communication identification information; and establish, in response to the second communication identification information being successfully matched with the first communication identification information, a short-range radio-frequency communication link between the remote controller and the electrical appliance. The short-range radio-frequency communication link is used for control of the electrical appliance by the remote controller.

In one or more technical solutions provided in the embodiments of the present disclosure, in the power-up state, because the electrical appliance is used as a slave device to broadcast the second communication identification information, and the remote controller is used as a master device to obtain the first communication identification information stored in the local storage region. Moreover, when the second communication identification information successfully matched with the first communication identification information is scanned, the short-range radio-frequency communication link between the remote controller and the electrical appliance that broadcasts the second communication identification information is established. In this way, the remote controller is enabled to realize the automatically establishment of the short-range radio-frequency communication link between the remote controller and the electrical appliance without the need for user operation based on the first communication identification information stored in the local storage region. In addition, screen display information is not required for selecting a remote controller paired with the electrical appliance. In this way, tedious user operations required for remote controller connection are avoided. Therefore, a connection between the remote controller and the electrical appliance becomes faster and more accurate.

### BRIEF DESCRIPTION OF THE DRAWINGS

In order to clearly explain technical solutions of embodiments of the present disclosure, drawings needing to be used in the description of the embodiments are briefly described below. Obviously, the drawings as described below are merely for some embodiments of the present disclosure. Based on these drawings, other drawings can be obtained by those skilled in the art without creative effort.
FIG. 1 is a system architecture diagram where a remote control connection method is applied in an embodiment of the present disclosure.
FIG. 2 is a flowchart of a remote control connection method applied in a remote controller according to an embodiment of the present disclosure.
FIG. 3 is a schematic interaction diagram of a remote control connection method according to an embodiment of the present disclosure.
FIG. 4 is a functional module diagram of a remote controller according to an embodiment of the present disclosure.
FIG. 5 is a schematic structural diagram of a remote controller according to an embodiment of the present disclosure.

### DETAILED DESCRIPTION

In view of a technical problem occurring in the related art that pairing connection efficiency between an electrical appliance and a remote controller is low, embodiments of the present disclosure provide a remote control connection method and apparatus, a remote controller, and a system. The general idea is as follows.

An electrical appliance needing to be remotely controlled is taken as a slave device to broadcast second communication identification information in a power-up state. Moreover, the remote controller is taken as a master device for scanning. In this way, first communication identification information stored in a local storage region is obtained. Moreover, when the second communication identification information successfully matched with the first communication identification information is scanned, a short-range radio-frequency communication link between the remote controller and the corresponding electrical appliance is established and is used for control of the electrical appliance by the remote controller. Therefore, after a first pairing connection between the electrical appliance and the remote controller, the short-range radio-frequency communication link between the electrical appliance and the remote controller can be quickly and accurately re-established based on the communication identification information stored in the local of the remote controller, to improve the pairing connection efficiency between the electrical appliance and the remote controller.

In order to make objects, technical solutions, and advantages of the present disclosure clearer, technical solutions according to embodiments of the present disclosure will be clearly and completely described below in combination with accompanying drawings of the embodiments of the present disclosure. Obviously, the embodiments described below are only a part of the embodiments of the present disclosure, rather than all of the embodiments. Based on the embodiments of the present disclosure, other embodiments obtained by those of ordinary skill in the art without creative labor shall fall within the scope of the present disclosure.

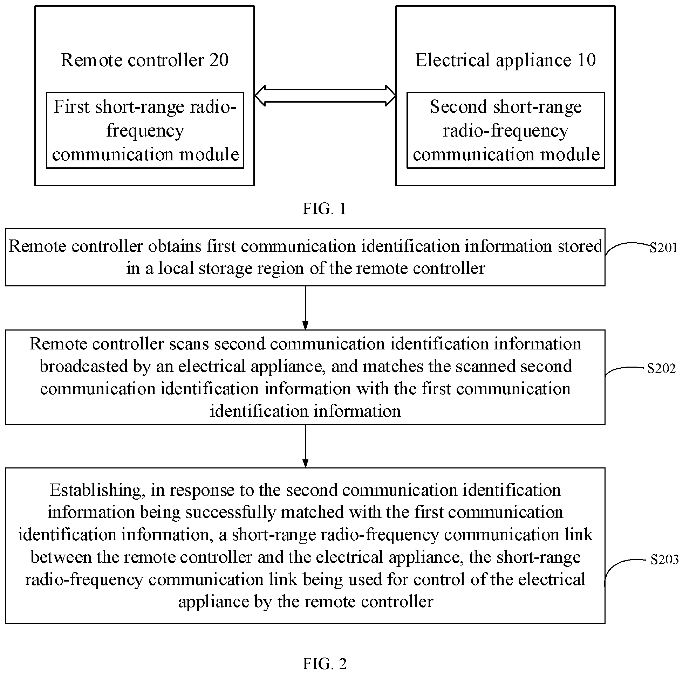

In a first aspect, the remote control connection method provided in the embodiments of the present disclosure is implemented based on a system architecture illustrated in FIG. 1. Referring to FIG. 1, a remote control connection system provided in the embodiments of the present disclosure includes an electrical appliance 10 and a remote controller 20. The electrical appliance 10 may be a device that needs to be controlled by a remote controller, such as an air conditioning device, a fresh air device, or a sound device. A first short-range radio-frequency communication module is configured on the electrical appliance 10. Moreover, a second short-range radio-frequency communication module is configured on the remote controller 20. The first short-range radio-frequency communication module and the second short-range radio-frequency communication module are of the same type. For example, each of the electrical appliance 10 and the remote controller 20 is configured with a Bluetooth module, or other types of short-range radio-frequency communication modules, such as zigbee modules. The remote controller 20 and the electrical appliance 10 establish a short-range radio-frequency communication link based on their respective short-range radio-frequency communication modules. In this way, the remote controller can control the electrical appliance through an established short-range video communication link.

In the embodiment of the present disclosure, the electrical appliance 10 is configured to broadcast the second communication identification information of the electrical appliance 10 in the power-up state. The remote controller 20 is configured to: obtain first communication identification information stored in a local storage region of the remote controller; scan second communication identification information broadcasted by an electrical appliance, and match the scanned second communication identification information with the first communication identification information; and establish, in response to the second communication identification information being successfully matched with the first communication identification information, a short-range radio-frequency communication link between the remote controller 20 and the electrical appliance 10. The short-range radio-frequency communication link is used for control of the electrical appliance 10 by the remote controller 20.

In a second aspect, an embodiment of the present disclosure provides a remote control connection method, which is applied in a remote controller side of the remote control connection system in FIG. 1. Referring to FIG. 2, a remote control connection method applied in the remote controller side includes the following steps.

At step S201, the remote controller obtains the first communication identification information stored in the local storage region of the remote controller.

In the embodiment of the present disclosure, the remote controller may read the first communication identification information from the local storage region of the remote controller in response to any key operation performed by a user on the remote controller. It may also be that a power-up signal of the remote controller triggers the remote controller to read the first communication identification information from the local storage region.

In an exemplary embodiment of the present disclosure, the first communication identification information may be stored in a local memory management unit (MMU) of the remote controller. The remote controller reads the first communication identification information from the local MMU of the remote controller to a memory, which facilitates subsequent matching with the scanned second communication identification information.

In an exemplary embodiment of the present disclosure, the first communication identification information may be a Bluetooth media access control (MAC) address of an electrical appliance to be controlled by the remote controller, or other forms of identification information for uniquely identifying a network location of the electrical appliance. The specific form depends on what kind of short-range radio-frequency communication mode is used by the remote controller to communicate with the electrical appliance.

At S202, the remote controller scans the second communication identification information broadcasted by the electrical appliance, and matches the scanned second communication identification information with the first communication identification information.

In the embodiment of the present disclosure, once the electrical appliance obtains the power-up signal, the electrical appliance is triggered to start broadcasting the second communication identification information of the electrical appliance, to wait for the remote controller to perform scanning and connection. In this way, the remote controller is enabled to scan the second communication identification information of the electrical appliance.

It should be understood that the second communication identification information and the first communication identification information in the embodiments of the present disclosure are merely different from different sources of the identification information.

In other embodiments of the present disclosure, other manners may also be used to trigger the electrical appliance to start broadcasting the second communication identification information. For example, in response to a key operation on the electrical appliance, the electrical appliance is triggered to start broadcasting the second communication identification information. For another example, in response to a first target key operation on the remote controller, the remote controller is triggered to control the electrical appliance to start broadcasting the second communication identification information in an infrared manner.

In the embodiment of the present disclosure, the electrical appliance works in a slave mode, which is also referred to as an advertise. The electrical appliance working in the slave mode can only be searched by the master device, and cannot actively search. The remote controller working in a master mode, also referred to as a scanner, may be connected to one or more slave devices. In the master mode, the remote controller may search for second communication identification information broadcasted by surrounding electrical appliances and select the electrical appliances that need to be connected for connection.

In some implementations, in order to avoid invalid matching processing and improve matching success efficiency, after the remote controller scans the second communication identification information broadcasted by the electrical appliance, it is determined whether the first communication identification information is valid. In response to the first communication identification information being valid, the first communication identification information is matched with the scanned second communication identification information. In response to the first communication identification information being invalid, the scanned second communication identification information is not matched with the first communication identification information.

In an exemplary embodiment of the present disclosure, determining whether the first communication identification information is valid may be determining whether the first communication identification information is an invalid communication identification value. The invalid communication identification value may be predetermined. By taking the Bluetooth MAC address as an example, the invalid communication identification value may refer to an all-zero MAC address sequence: 00-00-00-00-00-00. When the obtained first communication identification information is an all-zero MAC address sequence, it is indicated that the first communication identification information is invalid. Otherwise, it is indicated that the first communication identification information is valid when the obtained first communication identification information is not an all-zero MAC address sequence.

In some implementations, if the first communication identification information is invalid, there is no valid communication identification value written into the local storage region of the remote controller. The remote controller may filter each scanned radio-frequency signal based on a predetermined signal strength threshold, to determine a radio-frequency signal with a strong radio-frequency signal strength from each radio-frequency signal as second communication identification information of the electrical appliance that needs to be connected to the remote controller. Alternatively, by comparing a signal strength of each radio-frequency signal received by the remote controller, a radio-frequency signal having a maximum signal strength is filtered as the second communication identification information of the electrical appliance that needs to be connected to the remote controller. Moreover, a radio-frequency connection request is initiated to the electrical appliance that broadcasts the second communication identification information, to establish the short-range radio-frequency communication link between the remote controller and the electrical appliance for the first time.

Different from the above implementations, the validity of the first communication identification information may also not be determined. After the second communication identification information is scanned, the first communication identification information is directly matched with the scanned second communication identification information. When the matching between the first communication identification information and the scanned second communication identification information is successful, the radio-frequency connection request is initiated to the electrical appliance that broadcasts the second communication identification information. When no second communication identification information capable of being successfully matched with the first communication identification information exists, each radio-frequency signal received by the remote controller is filtered based on the predetermined signal strength threshold to determine the radio-frequency signal with a strong radio-frequency signal strength as the second communication identification information of the electrical appliance needing to be connected to the remote controller.

In an exemplary embodiment of the present disclosure, the signal strength threshold may be set according to actual requirements. The signal strength threshold may be set to a value ranging from -60 dBm to -70 dBm. By taking Bluetooth as an example, if the signal strength threshold is configured as -60 dBm, when the remote controller scans a plurality of Bluetooth signals, the plurality of Bluetooth signals scanned by the remote controller is filtered to filter a Bluetooth signal A having a signal strength rssi greater than -60 dBm. In addition, a Bluetooth connection request is initiated to an electrical appliance broadcasting the Bluetooth signal A.

At S203, in response to the second communication identification information being successfully matched with the first communication identification information, the short-range radio-frequency communication link between the remote controller and the electrical appliance is established. The short-range radio-frequency communication link is used for the control of the electrical appliance by the remote controller.

At step S203, in response to the second communication identification information successfully being successfully matched with the first communication identification information, the remote controller initiates the radio-frequency connection request to the electrical appliance that broadcasts the second communication identification information, to re-establish a radio-frequency connection between the remote controller and the electrical appliance that broadcasts the second communication identification information. Identity authentication is performed on the electrical appliance and the remote controller based on the established radio-frequency connection. In response to each of the identity authentication of the electrical appliance and the identity authentication of the remote controller being passed, the short-range radio-frequency communication link between the remote controller and the electrical appliance is formed. In response to each of the identity authentication of the electrical appliance and the identity authentication of the remote controller being not passed, the short-range radio-frequency communication link between the remote controller and the electrical appliance fails to be established.

In an exemplary embodiment of the present disclosure, in response to the second communication identification information being successfully matched with the first communication identification information, it may be indicated that the second communication identification information and the first communication identification information are the same MAC address sequence; otherwise, the matching between the second communication identification information and the first communication identification information is unsuccessful.

In an exemplary embodiment of the present disclosure, whether to establish the short-range radio-frequency communication link between the remote controller and the electrical appliance for the first time or re-establish the short-range radio-frequency communication link between the remote controller and the electrical appliance, the short-range radio-frequency communication link can be established each by the following processes. After the remote controller initiates the radio-frequency connection request to the electrical appliance that broadcasts the second communication identification information, in response to obtaining a response message of the electrical appliance for the radio-frequency connection request, the radio-frequency connection between the remote controller and the electrical appliance is established; otherwise, the radio-frequency connection between the remote controller and the electrical appliance fails to be established.

In an exemplary embodiment of the present disclosure, after the radio-frequency connection between the remote controller and the electrical appliance is established, the identity authentication of the electrical appliance and the identity authentication of the remote controller are performed through the radio-frequency connection. In an exemplary embodiment of the present disclosure, identity authentication can be performed with the electrical appliance based on a handshake message or key negotiation. An implementation process of performing identity authentication through the handshake message or the key negotiation can refer to related art, and details are omitted herein.

In the embodiment of the present disclosure, after the radio-frequency connection between the remote controller and the electrical appliance fails to be established, the electrical appliance may be triggered to restart broadcasting the second communication identification information, and the remote controller may be triggered to re-perform scanning. In this way, the remote controller can scan the second communication identification information successfully matched with the first communication identification information, and re-execute step S203.

In some implementations, only when the short-range radio-frequency communication link between the remote controller and the electrical appliance is established for the first time, the remote controller can write the second communication identification information of the electrical appliance to the local storage region, to update the communication identification value stored in the local storage region to form a binding relationship between the remote controller and the electrical appliance. In order to prevent the communication identification information stored in the local storage region stored in the remote controller from being tampered, different from the above-mentioned implementations, it may be that each time the short-range radio-frequency communication link between the remote controller and the electrical appliance is established, the remote controller rewrites the second communication identification information of the electrical appliance to the local storage region to update the communication identification value stored in the local storage region to form the binding relationship between the remote controller and the electrical appliance.

It should be noted that, in the embodiments of the present disclosure, the communication identification information stored in the local storage region of the remote controller is unique. Each time the second communication identification information is written, the first communication identification information previously stored will be covered. In this way, the connection between the remote controller and the electrical appliance is made unique. Therefore, the remote controller is enabled to accurately and uniquely control one electrical appliance.

After the remote controller establishes the short-range radio-frequency communication link with the electrical appliance, the electrical appliance monitors whether the short-range radio-frequency communication link between the electrical appliance and the remote controller is disconnected. In response to the short-range radio-frequency communication link between the electrical appliance and the remote controller being disconnected, the electrical appliance continues to broadcast the second communication identification information. Meanwhile, the remote controller also monitors whether the short-range radio-frequency communication link between the remote controller and the electrical appliance is disconnected. In response to the short-range radio-frequency communication link between the electrical appliance and the remote controller being disconnected, the remote controller is triggered to re-execute steps S201 to S203. In this way, the short-range radio-frequency communication link can be automatically re-established after the short-range radio-frequency communication link is disconnected midway.

In some implementations, in order to lower power consumption of the remote controller, after the short-range radio-frequency communication link between the remote controller and the electrical appliance is established, it is detected that whether a next key operation occurs within a predetermined delay interval subsequent to a current key operation on the remote controller. In response to no next key operation occurring within the predetermined delay interval subsequent to the current key operation on the remote controller, a current state of the electrical appliance is obtained. The remote controller is controlled to enter a sleep state corresponding to the current state of the electrical appliance. When the next key operation occurs in the predetermined delay interval after the current key operation, timing of the predetermined delay interval is restarted when the next key operation occurs.

In an exemplary embodiment of the present disclosure, in response to the electrical appliance being currently in a power-on state, the remote controller is controlled to enter a first sleep state. In the first sleep state, the short-distance radio-frequency communication link between the remote controller and the electrical appliance is in a connection holding state. When the remote controller is in the first sleep state, the remote controller can periodically wake up to a remote controllable state according to a predetermined wake-up time interval, or wake up the remote controller to the remote controllable state in response to any key operation or wake-up key operation of the user on the remote controller.

In an exemplary embodiment of the present disclosure, in response to the electrical appliance being currently in a power-off state, the remote controller is controlled to enter a second sleep state. Power consumption of the second sleep state is smaller than power consumption of the first sleep state. In the second sleep state, the short-distance radio-frequency communication link between the remote controller and the electrical appliance is in an off state. In this way, the remote controller is more power-saving.

When the remote controller is in the second sleep state, in response to any key operation or wake-up key operation on the remote controller, the remote controller is triggered to re-execute steps S201 to S203 to re-establish the short-range radio-frequency communication link between the remote controller and the electrical appliance and to wake up the remote controller to the remote controllable state.

Further, in order to change the electrical appliance controlled by the remote controller, in response to the target key operation on the remote controller, the first communication identification information stored in the local storage region of the remote controller is cleared to recover to an invalid communication identifier. In an exemplary embodiment of the present disclosure, the target key operation may be a combined key operation.

For example, as an example, a Bluetooth communication link is established between the remote controller and the electrical appliance. An electrical appliance A is previously connected to the remote controller, and the remote controller controls the electrical appliance A. Therefore, what is saved in the local storage region of the remote controller is a Bluetooth MAC address of the electrical appliance A. If an electrical appliance B needs to be connected currently, the electrical appliance B is controlled, and the local storage region of the remote controller stores the Bluetooth MAC address of the electrical appliance A, resulting in that the remote controller cannot establish a Bluetooth communication link with the electrical appliance B. In this situation, the user may perform the combined key operation on the remote controller. Moreover, the remote controller clears the Bluetooth MAC address of the electrical appliance A stored in the local storage region of the remote controller in response to the combined key operation, to recover to the invalid communication identifier.

Further, if the short-range radio-frequency communication link being established between the remote controller and the electrical appliance when the combination key operation of the user on the remote controller is obtained, the remote controller, in response to the combined key operation, not only clears the Bluetooth MAC address of the electrical appliance A stored in the local storage region of the remote controller, but also disconnects the short-range radio-frequency communication link between the remote controller and the electrical appliance.

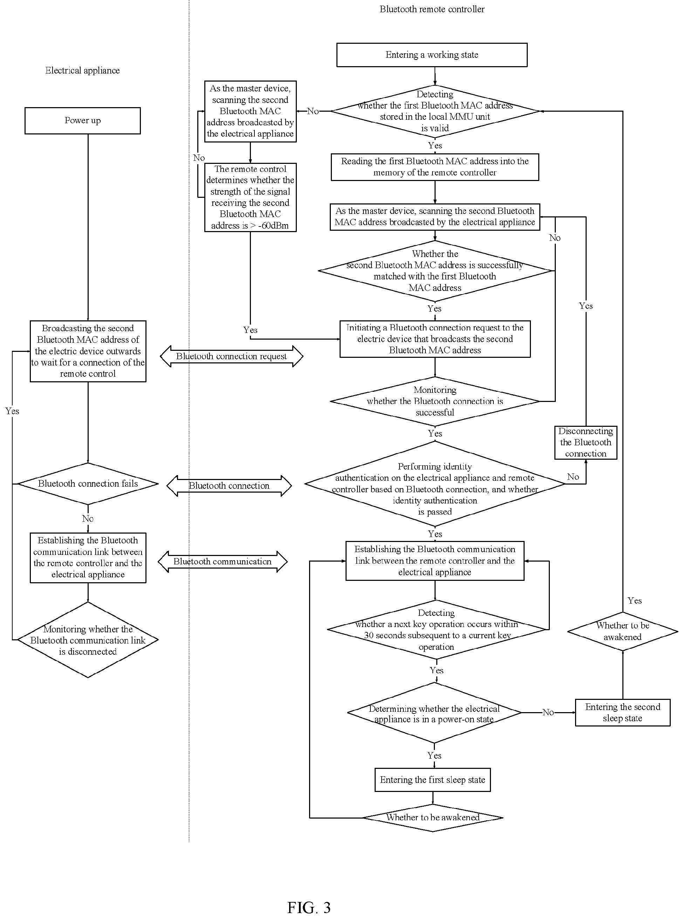

In order to better understand the technical solution provided in the embodiments of the present disclosure, with reference to FIG. 3, comprehensive illustrative description of the remote control connection method provided in the embodiments of the present disclosure is described below by using the establishment of the Bluetooth communication link between the remote controller and the electrical appliance as an example.

For the electrical appliance, step A1 is first executed: the electrical appliance is powered up.

After executing step A1, the electrical appliance continues to execute step A2: the electrical appliance broadcasts a second Bluetooth MAC address of the electrical appliance outwards to wait for a connection of the remote controller.

For the remote controller, step B3 is first executed: the remote controller enters a working state.

After executing step B3, the remote controller proceeds to execute step B4: the remote controller detects whether a first Bluetooth MAC address stored in a local MMU unit is valid. When the first Bluetooth MAC address is valid, the remote controller executes steps B5 to B7. When the first Bluetooth MAC address is invalid, the remote controller executes steps B8 to B9.

At step B5, the remote controller reads the first Bluetooth MAC address into the memory of the remote controller.

At step B6, the remote controller serves as the master device and scans the second Bluetooth MAC address broadcasted by the electrical appliance.

At step B7, it is determined whether the second Bluetooth MAC address is successfully matched with the first Bluetooth MAC address. When the second Bluetooth MAC address is successfully matched with the first Bluetooth MAC address, step B10 is executed; otherwise, return to execute step B6.

At step B8, the remote controller serves as the master device and scans the second Bluetooth MAC address broadcasted by the electrical appliance.

At step B9, the remote controller determines whether a strength of a signal receiving the second Bluetooth MAC address is greater than -60 dBm. When the strength of the signal receiving the second Bluetooth MAC address is greater than -60 dBm, the remote controller executes step B10.

At step B10, the remote controller initiates the Bluetooth connection request to the electrical appliance broadcasting the second Bluetooth MAC address and triggers each of the remote controller and the electrical appliance to execute step AB11.

At step AB11, it is monitored whether the Bluetooth connection is successful. When the Bluetooth connection is monitored to be successful, the remote controller executes step AB12 through interaction with the electrical appliance; otherwise, the remote controller returns to execute step B6, and the electrical appliance returns to execute step A2.

At step B12, identity authentication is performed on the electrical appliance and the remote controller based on the Bluetooth connection. In response to the identity authentication of the remote controller and the identity authentication of the electrical appliance being passed, the Bluetooth communication link is established between the remote controller and the electrical appliance. Otherwise, the remote controller returns to execute step B6, and the electrical appliance returns to execute step A2. After the Bluetooth communication link is established, the second Bluetooth MAC address of the electrical appliance may also be written into the local MMU unit of the remote controller to update the first Bluetooth MAC address stored therein.

After the Bluetooth communication link is established between the remote controller and the electrical appliance, the electrical appliance continues to execute step A13: the electrical appliance monitors whether the Bluetooth communication link is disconnected. When the electrical appliance monitors that the Bluetooth communication link is disconnected, the electrical appliance returns to execute step A2.

After the Bluetooth communication link is established between the remote controller and the electrical appliance, the remote controller continues to execute step B 14: the remote controller monitors whether the next key operation is performed within 30s after each key operation. When the next key operation is performed within 30s after each key operation, the timing of 30s is restarted. Otherwise, the remote controller executes step B15.

At step B15, the remote controller determines whether the electrical appliance is in the power-on state. When the electrical appliance is in the power-on state, the remote controller executes steps B16 to B17. Otherwise, the remote controller executes steps B18 to B 19.

At step B16, the remote controller modifies a connection interval (i.e., the connection holding state) of the Bluetooth communication link to be shorter. In this way, the remote controller is allowed to enter the first sleep state.

After step B16, proceed to step B 17: the remote controller monitors whether the remote controller itself is awakened. When the remote controller is awakened, the connection interval of the Bluetooth communication link is modified to be longer, and the remote controller is controlled to enter the working state. In this way, communication is made re-start between the remote controller and the electrical appliance.

At step B18, the Bluetooth communication link is disconnected between the remote controller and the electrical appliance. In this way, the remote controller is allowed to enter the second sleep state.

After step B18, proceed to step B19: the remote controller monitors whether the remote controller itself is awakened. When the remote controller is awakened, the remote controller enters the working state and returns to execute step B4.

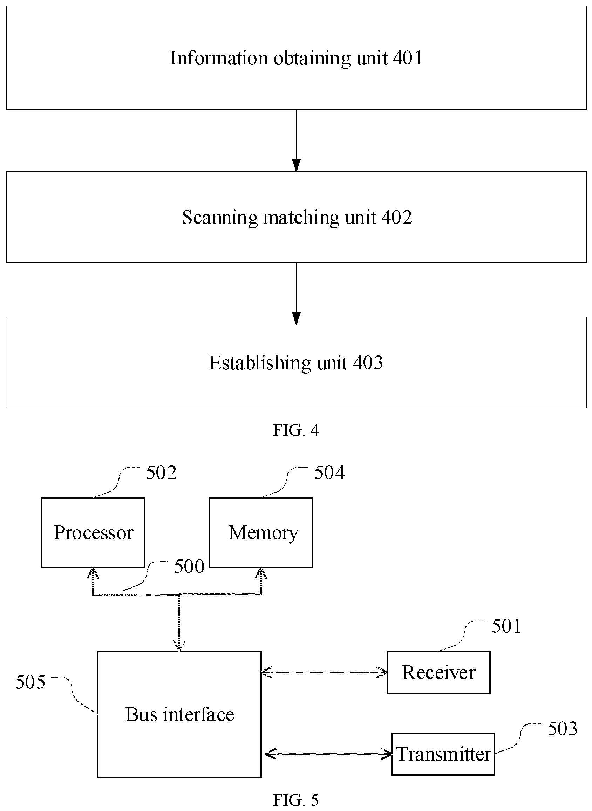

According to a third aspect, an embodiment of the present disclosure provides a remote control connection apparatus, which is applied in a remote controller. Referring to FIG. 4, the remote control connection apparatus provided in the embodiments of the present disclosure includes: an information obtaining unit 401 configured to obtain first communication identification information stored in a local storage region of the remote controller; a scanning matching unit 402 configured to scan second communication identification information broadcasted by an electrical appliance and match the scanned second communication identification information with the first communication identification information; and an establishing unit 403 configured to establish, in response to the second communication identification information being successfully matched with the first communication identification information, a short-range radio-frequency communication link between the remote controller and the electrical appliance. The short-range radio-frequency communication link is used for control of the electrical appliance by the remote controller.

In some implementations, the establishing unit 403 includes: an initiating subunit configured to initiate the radio-frequency connection request to the electrical appliance that broadcasts the second communication identification information, to establish the radio-frequency connection between the remote controller and the electrical appliance; an authentication subunit configured to perform identity authentication on the electrical appliance and the remote controller based on the radio-frequency connection; and a communication subunit configured to form, in response to each of the identity authentication of the electrical appliance and the identity authentication of the remote controller being passed, the short-range radio-frequency communication link between the remote controller and the electrical appliance.

In some implementations, the scanning matching unit 402 includes: a validity determination unit configured to determine whether the first communication identification information is valid; and a first execution subunit configured to execute, in response to the first communication identification information being valid, the step of the matching the scanned second communication identification information with the first communication identification information.

In some implementations, the apparatus further includes a second execution subunit configured to: determine, in response to the first communication identification information being invalid, the second communication identification information based on the predetermined signal strength threshold; and initiate the radio-frequency connection request to the electrical appliance that broadcasts the second communication identification information, to establish the short-range radio-frequency communication link between the remote controller and the electrical appliance for the first time.

In some implementations, the apparatus further includes a writing unit configured to: write the second communication identification information of the electrical appliance to the local storage region of the remote controller when the short-range radio-frequency communication link between the remote controller and the electrical appliance is established for the first time to form the binding relationship between the remote controller and the electrical appliance; or each time the short-range radio-frequency communication link is established between the remote controller and the electrical appliance, write the second communication identification information of the electrical appliance to the local storage region of the remote controller to form the binding relationship between the remote controller and the electrical appliance.

In some implementations, the apparatus further includes: an operation detection unit configured to detect whether the next key operation occurs within the predetermined delay interval subsequent to the current key operation on the remote controller; a state detection unit configured to obtain, in response to no next key operation occurring within the predetermined delay interval subsequent to the current key operation on the remote controller, the current state of the electrical appliance; and a sleep control unit configured to control the remote controller to enter the sleep state corresponding to the current state of the electrical appliance.

In some implementations, the sleep control unit includes a first sub-control unit and a second sub-control unit. The first sub-control unit is configured to control, in response to the electrical appliance being currently in the power-on state, the remote controller to enter the first sleep state. In the first sleep state, the short-range radio-frequency communication link between the remote controller and the electrical appliance is in the connection holding state. The second sub-control unit is configured to control, in response to the electrical appliance being currently in the power-off state, the remote controller to enter the second sleep state. In the second sleep state, the short-range radio-frequency communication link between the remote controller and the electrical appliance is in the off state. The power consumption of the second sleep state is smaller than the power consumption of the first sleep state.

In some implementations, the apparatus further includes an identification clearing unit configured to clear, in response to the target key operation on the remote controller, the first communication identification information stored in the local storage region of the remote controller to recover to the invalid communication identification value.

According to a fourth aspect, based on the same disclosure concept, an embodiment of the present disclosure provides a remote controller. As illustrated in FIG. 1 and FIG. 5, the remote controller further includes a memory 504, a processor 502, and a computer program stored on the memory 504 and executable on the processor 502. The processor 502, when executing the computer program, implements the remote control connection method as described in the second aspect.

In FIG. 5, a bus architecture (represented by a bus 500) is provided. The bus 500 may include any number of interconnected buses and bridges. The bus 500 links together various circuits including one or more processors represented by the processor 502 and a memory represented by the memory 504. The bus 500 may also link various other circuits together, such as a peripheral device, a voltage stabilizer, and a power management circuit, which are well known in the art. Therefore, the present disclosure does not further describe these herein. A bus interface 505 provides an interface between the bus 500 and a receiver 501 and a transmitter 503. The receiver 501 and the transmitter 503 may be the same element, i.e., a transceiver, providing a unit for communicating with various other devices on a transmission medium. The processor 502 is responsible for managing the bus 500 and general processing, while the memory 504 may be used to store data used by the processor 502 when performing operations.

The functions described herein may be implemented in hardware, software performed by the processor, firmware, or any combination thereof. When the functions are implemented in the software performed by the processor, the functions may be stored as one or more instructions or codes on or transmitted over a computer-readable medium. Other examples and implementations are within the scope and spirit of the disclosure and the appended claims. For example, due to the nature of the software, the functions described above may be implemented using software performed by the processor, hardware, firmware, hardwired, or a combination of any of these. In addition, each functional unit may be integrated into a processing unit, or each unit may exist alone physically, or two or more units may be integrated in one unit.

In several embodiments provided by the present disclosure, it should be understood that, the disclosed technical contents may be implemented in other ways. The apparatus embodiments described above are merely illustrative. For example, the units are merely divided according to logic functions, and may be divided in other ways in actual implementation. For example, a plurality of units or components may be combined or may be integrated into another system, or some features may be ignored or not be performed. In addition, the mutual coupling or direct coupling or communication connection between the various components illustrated or discussed may be a direct coupling or communication connection via some interfaces, units or modules, and may be electrical or other forms.

The units described as separate parts may be or not be physically separated. Parts serving as the control apparatus may be or not be physical units, i.e., the parts may be located in one location, or may be distributed on a plurality of units. Some or all of the units may be selected as desired to achieve the objects of solutions of the embodiments.

If the integrated unit is implemented in the form of a software functional unit and sold or used as an independent product, it can be stored in a computer-readable storage medium. Based on this understanding, all or part of the technical solutions or the essential parts of the technical solutions (i.e. the parts making a contribution to the related art) can be embodied in form of software product, which is stored in a storage medium, and includes several instruction used for causing a computer device (for example, a personal computer, a server or a network device) to execute all or part of steps in the methods described in respective embodiments of the present disclosure. The above storage medium may be any medium capable of storing program codes, including a USB flash disk, a Read-Only Memory (ROM), a Random Access Memory (RAM), a mobile hard disk, a disc, or a light disk.

While preferred embodiments of the present disclosure have been described above, the present disclosure is not limited thereto. For those skilled in the art, various changes and modifications can be made to the present disclosure. Any modification, equivalent replacement, improvement, etc., made within the spirit and principle of the present disclosure shall fall within the scope of the present disclosure.

## Claims

1. A remote control connection method, applied in a remote controller, the method comprising:
obtaining first communication identification information stored in a local storage region of the remote controller;
scanning second communication identification information broadcasted by an electrical appliance, and matching the scanned second communication identification information with the first communication identification information; and
establishing, in response to the second communication identification information being successfully matched with the first communication identification information, a short-range radio-frequency communication link between the remote controller and the electrical appliance, the short-range radio-frequency communication link being used for control of the electrical appliance by the remote controller.

2. The remote control connection method according to claim 1, wherein said establishing the short-range radio-frequency communication link between the remote controller and the electrical appliance comprises:
initiating a radio-frequency connection request to the electrical appliance that broadcasts the second communication identification information, to establish a radio-frequency connection between the remote controller and the electrical appliance;
performing identity authentication on the electrical appliance and the remote controller based on the radio-frequency connection; and
forming, in response to each of the identity authentication of the electrical appliance and the identity authentication of the remote controller being passed, the short-range radio-frequency communication link between the remote controller and the electrical appliance.

3. The method according to claim 1, further comprising, subsequent to said scanning the second communication identification information broadcasted by the electrical appliance:
determining whether the first communication identification information is valid; and
performing, in response to the first communication identification information being valid, said matching the scanned second communication identification information with the first communication identification information.

4. The method according to claim 3, further comprising, subsequent to said determining whether the first communication identification information is valid:
determining, in response to the first communication identification information being invalid, second communication identification information based on a predetermined signal strength threshold; and
initiating a radio-frequency connection request to the electrical appliance that broadcasts the second communication identification information, to establish the short-range radio-frequency communication link between the remote controller and the electrical appliance for the first time.

5. The method according to claim 4, wherein:
when the short-range radio-frequency communication link between the remote controller and the electrical appliance is established for the first time, the second communication identification information of the electrical appliance is written to the local storage region of the remote controller to form a binding relationship between the remote controller and the electrical appliance; or
each time the short-range radio-frequency communication link is established between the remote controller and the electrical appliance, the second communication identification information of the electrical appliance is written to the local storage region of the remote controller to form the binding relationship between the remote controller and the electrical appliance.

6. The method according to any one of claims 1 to 5, further comprising, subsequent to said establishing the short-range radio-frequency communication link between the remote controller and the electrical appliance:
detecting whether a next key operation occurs within a predetermined delay interval subsequent to a current key operation on the remote controller;
obtaining, in response to no next key operation occurring within the predetermined delay interval subsequent to the current key operation on the remote controller, a current state of the electrical appliance; and
controlling the remote controller to enter a sleep state corresponding to the current state of the electrical appliance.

7. The method according to claim 6, wherein said controlling the remote controller to enter the sleep state corresponding to the current state of the electrical appliance comprises:
controlling, in response to the electrical appliance being currently in a power-on state, the remote controller to enter a first sleep state, wherein in the first sleep state, the short-range radio-frequency communication link between the remote controller and the electrical appliance being in a connection holding state; and
controlling, in response to the electrical appliance being currently in a power-off state, the remote controller to enter a second sleep state, wherein in the second sleep state, the short-range radio-frequency communication link between the remote controller and the electrical appliance is in an off state;
wherein power consumption of the second sleep state is smaller than power consumption of the first sleep state.

8. The method according to claim 1, further comprising:
clearing, in response to a target key operation on the remote controller, the first communication identification information stored in the local storage region of the remote controller to recover to an invalid communication identification value.

9. A remote control connection apparatus, applied in a remote controller, the apparatus comprising:
an information obtaining unit configured to obtain first communication identification information stored in a local storage region of the remote controller;
a scanning matching unit configured to scan second communication identification information broadcasted by an electrical appliance and match the scanned second communication identification information with the first communication identification information; and
an establishing unit configured to establish, in response to the second communication identification information being successfully matched with the first communication identification information, a short-range radio-frequency communication link between the remote controller and the electrical appliance, the short-range radio-frequency communication link being used for control of the electrical appliance by the remote controller.

10. A remote controller, comprising:
a memory;
a processor; and
a computer program stored on the memory and executable on the processor, the processor, when executing the computer program, implementing the method according to any one of claims 1 to 8.

11. A remote control connection system, comprising:
an electrical appliance configured to broadcast second communication identification information of the electrical appliance in a power-up state; and
a remote controller configured to:
obtain first communication identification information stored in a local storage region of the remote controller;
scan the second communication identification information broadcasted by the electrical appliance, and match the scanned second communication identification information with the first communication identification information; and
establish, in response to the second communication identification information being successfully matched with the first communication identification information, a short-range radio-frequency communication link between the remote controller and the electrical appliance, the short-range radio-frequency communication link being used for control of the electrical appliance by the remote controller.
